# FASCICULE DE BREVET EUROPEEN

(11) **EP 3 012 652 B1**
(45) Date de publication et mention de la délivrance du brevet: **18.11.2020**
(21) Numéro de dépôt: 15187235.5
(22) Date de dépôt: 28.09.2015
(51) Int. Cl.: G01S 7/02, G01S 7/40, G08G 1/054, G01P 21/02, G01S 13/92, G01P 3/36

(54) **UNITE DE CONTROLE ROUTIER**
ANLAGE ZUR VERKEHRSÜBERWACHUNG
ROAD CONTROL UNIT

(30) Priorité: 21.10.2014 FR 1460115
(43) Date de publication de la demande: 27.04.2016
(73) Titulaire: Idemia Identity & Security France, 92400 Courbevoie (FR)
(72) Inventeur: ROMBAUX, Sylvain, 92445 Issy-les-Moulineaux (FR); GUIDON, Eric, 92445 Issy-les-Moulineaux (FR)
(74) Mandataire: Plasseraud IP

(56) Documents cités:
- EP-A2- 1 148 457
- EP-A2- 2 690 459
- WO-A1-2012/001332
- DE-B3-102013 006 942
- US-A1- 2004 101 166
- US-A1- 2011 037 640

## Description

La présente invention concerne une unité de contrôle routier.

Les unités de contrôle routier combinent chacune un cinémomètre et un ou plusieurs dispositifs de prise de vues. Le cinémomètre mesure la vitesse du véhicule et l'un des dispositifs de prise de vues saisit une image qui contient la plaque d'immatriculation du véhicule si la vitesse mesurée est supérieure à la limite autorisée.

Il est bien entendu nécessaire d'assurer une concordance sans ambiguïté entre le véhicule qui est contrôlé et celui qui figure sur l'image, tout en fournissant des éléments de contexte. En effet, seules les images où figurent un seul véhicule et des éléments de son environnement au moment du contrôle, sont prises en considération. Chaque dispositif de prise de vues, notamment sa longueur focale et l'orientation de son axe optique, fait donc l'objet de réglages très fins en fonction de la position de l'unité de contrôle routier sur le bord de la route.

Actuellement, la position et l'orientation des dispositifs de prise de vues sont réglées manuellement par un opérateur pour chaque nouvelle installation d'une unité de contrôle routier, en se basant sur des images qui sont saisies par les dispositifs de prise de vues lors de passages de véhicules, et qui sont visualisées par l'opérateur sur un écran. Mais de tels réglages sont coûteux, longs et fastidieux, et leur fiabilité et leur exactitude, autrement dit leur justesse et leur fidélité selon le vocable de la norme NF ISO 5725 adoptée par l'Organisme International de la Métrologie Légale (OIML), dépendent de facteurs humains.

Le document US 2011/0037640 décrit une unité de contrôle routier dans laquelle un système radar est relié à un système de vision stéréo par une charnière.

Le document WO 2012/001332 décrit une autre unité de contrôle routier qui possède une structure portante en forme de tourelle, et dans laquelle le radar de détection et chaque caméra sont fixés séparément sur la structure portante par des supports dédiés.

Enfin, le document US 2004/0101166 décrit encore une autre unité de contrôle routier dans laquelle une caméra est fixée latéralement par rapport au détecteur radar.

Partant de là, un but de l'invention consiste à proposer une nouvelle unité de contrôle routier, qui puisse être installée sur le bord d'une route d'une façon plus exacte, plus simple et plus rapide.

Pour atteindre ce but ou d'autres, un premier aspect de l'invention propose une unité de contrôle routier qui est conforme à la revendication 1. Cette unité de contrôle routier comprend un cinémomètre et au moins un dispositif de prise de vues, et une platine qui est intermédiaire entre le cinémomètre et chaque dispositif de prise de vues. La platine est adaptée pour former une liaison d'assemblage qui est démontable avec le cinémomètre, et pour, lorsque la platine est assemblée avec le cinémomètre, déterminer sans marge d'ajustement une orientation angulaire de la platine par rapport à un axe radioélectrique du cinémomètre. En outre, la platine est adaptée pour supporter chaque dispositif de prise de vues avec une orientation angulaire pour ce dispositif de prise de vues qui est contenue à l'intérieur d'au moins une marge d'ajustement s'étendant de part et d'autre d'une orientation nominale, la marge d'ajustement et l'orientation nominale étant déterminées par la platine elle-même pour chaque dispositif de prise de vues. De plus, la platine comporte pour chaque dispositif de prise de vues, un système de verrouillage qui est adapté pour bloquer l'orientation angulaire de ce dispositif de prise de vues. Ainsi, lorsque la platine est assemblée au cinémomètre et le système de verrouillage est activé, un axe optique du dispositif de prise de vues est maintenu avec une orientation relative qui est constante par rapport à l'axe radioélectrique du cinémomètre.

Ainsi, la platine permet de monter chaque dispositif de prise de vues sur le cinémomètre avec une orientation nominale qui est prédéterminée. De cette façon, l'exactitude, la simplicité et la rapidité de l'installation de l'unité de contrôle routier sont améliorées. Simultanément, les marges d'ajustement permettent de prendre en compte des variations possibles dans les largeurs des voies de circulation de la route, des variations dans la vitesse moyenne des véhicules sur la route, et des variations topographiques du lieu d'installation de l'unité de contrôle routier, telles que l'existence éventuelle d'un dévers de la route, et des variations possibles dans la hauteur d'installation de l'unité de contrôle routier par rapport à la route, ou des variations dans la largeurs des voies.

En outre, l'assemblage de la platine sur le cinémomètre, et l'utilisation de la platine pour supporter chaque dispositif de prise de vues, assurent que le pointage de chaque dispositif de prise de vues par rapport à l'orientation du cinémomètre est moins susceptible d'être altéré par des vibrations, des mouvements ou des chocs involontaires qui surviendraient pendant l'installation ou pendant une session de contrôle routier.

Selon des caractéristiques supplémentaires de l'invention :
- l'unité de contrôle routier est adaptée pour que l'orientation de chaque dispositif de prise de vues puisse être ajustée manuellement à l'intérieur de ladite au moins une marge d'ajustement correspondante telle que déterminée par la platine ;
- la platine est dédiée à un intervalle de valeurs pour une distance de rive définie comme une distance d'installation, mesurée horizontalement, entre un centre de l'unité de contrôle routier et une ligne de rive d'une route sur un côté de laquelle l'unité de contrôle routier est destinée à être installée, et une indication de cet intervalle de valeurs pour la distance de rive est inscrite sur la platine ; et
- l'unité de contrôle routier comprend en outre au moins une platine supplémentaire, toutes les platines étant interchangeables et adaptées pour être substituées les unes aux autres entre le cinémomètre et chaque dispositif de prise de vues, et les platines étant dédiées respectivement à des intervalles disjoints pour la valeur de distance de rive, une indication de chaque intervalle de valeurs étant inscrite sur la platine correspondante.

Dans divers modes de réalisation de l'unité de contrôle routier selon l'invention, on peut éventuellement avoir recours à l'une et/ou l'autre des dispositions suivantes :
- la ou les marge(s) d'ajustement qui s'étendent de part et d'autre de l'orientation nominale peut (peuvent) être une marge d'ajustement en gisement, ou une marge d'ajustement en site, ou à la fois une marge d'ajustement en gisement et une marge d'ajustement en site ;
- une telle marge d'ajustement en gisement peut être inférieure à 5°, préférentiellement inférieure à 3°, et plus préférentiellement inférieure à 2°, de part et d'autre de l'orientation nominale, ou être nulle. Notamment, la marge d'ajustement en gisement peut dépendre d'une valeur focale d'un objectif qui est utilisé pour le dispositif de prise de vues correspondant. En particulier, la marge d'ajustement en gisement peut être inférieure à 2°, 1,5°, 1° ou 0,5° de part et d'autre de l'orientation nominale, selon que la longueur focale de l'objectif est respectivement 16 mm, 25 mm, 35 mm ou 50 mm avec une valeur d'un demi-angle d'ouverture du champ optique en gisement qui est respectivement de 10,6°, 7°, 5° ou 3,5° ;
- la marge d'ajustement en site peut être inférieure à 4°, préférentiellement inférieure à 3°, de part et d'autre de l'orientation nominale, ou être nulle ;
- la platine peut être dédiée à un intervalle de valeurs pour une distance de rive qui est définie comme une distance d'installation, mesurée horizontalement, entre un centre de l'unité de contrôle routier et une ligne de rive de la route sur un côté de laquelle l'unité de contrôle routier est destinée à être installée. Dans ce cas, une indication de cet intervalle de valeurs pour la distance de rive est inscrite sur la platine ;
- l'unité de contrôle routier peut comprendre en outre au moins une platine supplémentaire. Dans ce cas, toutes les platines sont adaptées pour être substituées les unes aux autres entre le cinémomètre et chaque dispositif de prise de vues, et elles sont dédiées respectivement à des intervalles disjoints pour la valeur de distance de rive, avec l'indication de chaque intervalle de valeurs qui est inscrite sur la platine correspondante ;
- chaque platine peut comporter en outre, pour chaque dispositif de prise de vues, une indication d'une valeur à appliquer pour la longueur focale de l'objectif de ce dispositif de prise de vues. Autrement dit, l'objectif du dispositif de prise de vues doit posséder pour sa longueur focale, la valeur qui est indiquée sur la platine utilisée ; et
- chaque platine peut être adaptée pour supporter deux dispositifs de prise de vues, avec des orientations nominales respectives qui sont différentes pour ces deux dispositifs de prise de vues. Ainsi, chaque dispositif de prise de vues peut notamment être dédié à un sens de circulation des véhicules sur la route, qui est différent de celui de l'autre dispositif de prise de vues. L'unité de contrôle routier de l'invention permet alors de contrôler la vitesse des véhicules qui circulent dans les deux sens sur la route, à partir d'un seul côté de la route sans modifier l'installation de l'unité de contrôle.

Dans des réalisations préférées de l'invention :
- l'intervalle pour la valeur de distance de rive, auquel est dédiée une première des platines, peut être compris entre 1,5 m et 2,5 m, et la valeur de longueur focale qui est indiquée pour un objectif d'un premier des deux dispositifs de prise de vues, peut être comprise entre 33 mm et 37 mm, et la valeur de longueur focale qui est indiquée pour un objectif de l'autre dispositif de prise de vues, peut être comprise entre 14 mm et 18 mm ;
- l'intervalle pour la valeur de distance de rive, auquel est dédiée une deuxième des platines, peut être compris entre 2,5 m et 4,5 m, et la valeur de longueur focale qui est indiquée pour l'objectif du premier dispositif de prise de vues, peut être comprise entre 33 mm et 37 mm, et la valeur de longueur focale qui est indiquée pour l'objectif de l'autre dispositif de prise de vues, peut être comprise entre 23 mm et 27 mm ; et
- l'intervalle pour la valeur de distance de rive, auquel est dédiée une troisième des platines, peut être compris entre 4,5 m et 5,5 m, et la valeur de longueur focale qui est indiquée pour l'objectif du premier dispositif de prise de vues, peut être comprise entre 48 mm et 52 mm, et la valeur de longueur focale qui est indiquée pour l'objectif de l'autre dispositif de prise de vues, peut être comprise entre 23 mm et 27 mm.

En outre, pour l'un au moins des dispositifs de prise de vues, la marge d'ajustement en gisement peut varier d'une platine à une autre, en fonction de la valeur de longueur focale qui est indiquée sur ces platines pour ce dispositif de prise de vues.

Un deuxième aspect de l'invention propose un jeu de plusieurs platines conforme à la revendication 9, pour une unité de contrôle routier qui comprend un cinémomètre et au moins un dispositif de prise de vues. Ces platines sont interchangeables et adaptées pour être substituées les unes aux autres entre le cinémomètre et chaque dispositif de prise de vues, et sont dédiées respectivement à des intervalles disjoints de valeurs pour la distance de rive. Pour cela, une indication de chaque intervalle de valeurs pour la distance de rive est inscrite sur la platine correspondante. Chaque platine est en outre adaptée pour former une liaison d'assemblage démontable avec le cinémomètre et pour, lorsque qu'elle est assemblée avec le cinémomètre, déterminer sans marge d'ajustement l'orientation angulaire de la platine par rapport à l'axe radioélectrique du cinémomètre. Chaque platine est aussi adaptée pour supporter chaque dispositif de prise de vues avec une orientation angulaire de ce dispositif de prise de vues qui est contenue à l'intérieur d'au moins une marge d'ajustement s'étendant de part et d'autre d'une orientation nominale, la marge d'ajustement et l'orientation nominale étant déterminées par la platine elle-même pour chaque dispositif de prise de vues. Chaque platine est aussi adaptée pour que l'orientation de chaque dispositif de prise de vues puisse être ajustée manuellement à l'intérieur de l'au moins une marge d'ajustement correspondante telle que déterminée par la platine. De plus, chaque platine comporte pour chaque dispositif de prise de vues, un système de verrouillage qui est adapté pour bloquer l'orientation angulaire de ce dispositif de prise de vues, de sorte que lorsque cette platine est assemblée au cinémomètre et le système de verrouillage est activé, l'axe optique du dispositif de prise de vues est maintenu avec une orientation relative qui est constante par rapport à l'axe radioélectrique du cinémomètre.

Enfin, un troisième aspect de l'invention propose un procédé pour installer une unité de contrôle routier sur un côté d'une route, comprenant les étapes suivantes :
/1/ fournir une unité de contrôle routier qui est conforme au premier aspect de l'invention, et qui comprend un jeu de plusieurs platines conforme au second aspect de l'invention ;
/2/ mesurer une valeur pour la distance de rive ;
/3/ sélectionner une des platines en fonction de la valeur qui a été mesurée à l'étape /2/, de sorte que cette valeur mesurée soit comprise dans l'intervalle de valeurs pour la distance de rive dont l'indication est inscrite sur la platine sélectionnée ;
/4/ assembler la platine sélectionnée à l'étape /3/ avec le cinémomètre ; et
/5/ activer le système de verrouillage de la platine sélectionnée pour chaque dispositif de prise de vues.

Eventuellement, le procédé peut comprendre en outre, entre les étapes /4/ et /5/, un ajustement manuel de l'orientation de chaque dispositif de prise de vues à l'intérieur de la marge ou des marges d'ajustement correspondante(s), notamment pour prendre en compte des largeurs particulières pour les voies de circulation de la route, la vitesse moyenne des véhicules, et une topographie particulière de la route sur laquelle le contrôle routier est effectué.

Le procédé peut aussi comprendre une étape de sélection d'un objectif pour chaque dispositif de prise de vues, ou une étape de réglage de son objectif, en fonction de la valeur de longueur focale qui peut être indiquée sur la platine sélectionnée pour ce dispositif de prise de vues.

D'autres particularités et avantages de la présente invention apparaîtront dans la description ci-après d'exemples de réalisation non limitatifs, en référence aux dessins annexés, dans lesquels :
- la figure 1 est une vue générale illustrant des conditions d'installation et d'utilisation d'une unité de contrôle routier conforme à l'invention ;
- la figure 2 est une vue en perspective d'une partie de l'unité de contrôle routier de la figure 1 ;
- les figures 3, 4 et 5 sont des vues en perspective, latérale droite et latérale gauche, respectivement, d'une pièce principale d'une platine de l'unité de contrôle routier de la figure 2 ;
- les figures 6 et 7 sont des vues en perspective et de dessus, respectivement, d'une pièce secondaire de la platine de l'unité de contrôle routier de la figure 2 ;
- la figure 8 correspond à la figure 7 pour une autre pièce secondaire de la platine de l'unité de contrôle routier de la figure 2 ; et
- la figure 9 est un tableau rassemblant différentes valeurs de paramètres pour un jeu de platines de l'unité de contrôle routier de la figure 2.

Pour raison de clarté, les dimensions des éléments qui sont représentés dans ces figures ne correspondent ni à des dimensions réelles ni à des rapports de dimensions réels. En outre, des références identiques qui sont indiquées dans des figures différentes désignent des éléments identiques ou qui ont des fonctions identiques.

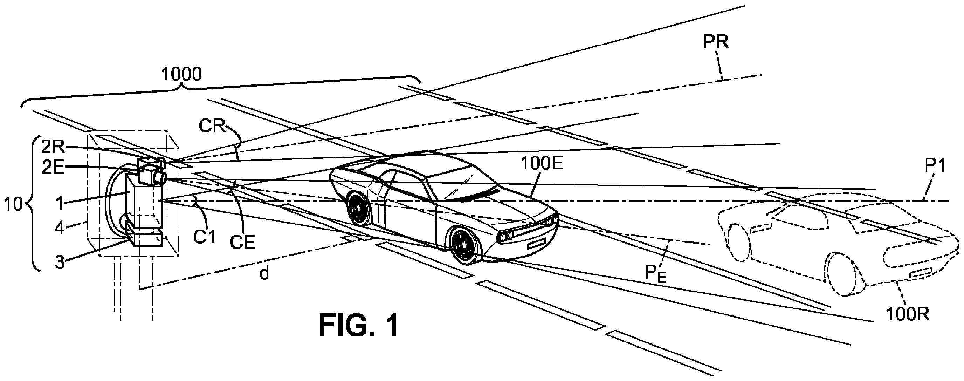

Les références ci-dessous indiquées dans la figure 1 ont les significations suivantes :
- 10: unité de contrôle routier, pour contrôler des vitesses de véhicules
- 1: cinémomètre à effet Doppler
- 2E/2R: deux dispositifs de prise de vues, par exemple du type appareils photographiques
- 3: contrôleur de l'unité de contrôle routier
- 4: cabine de l'unité de contrôle routier, contenant le cinémomètre, les deux dispositifs de prise de vues et le contrôleur
- P1: axe radioélectrique du cinémomètre
- C1: champ de détection du cinémomètre, réparti autour de l'axe radioélectrique P1
- PE: axe optique du dispositif de prise de vues 2E
- CE: champ optique du dispositif de prise de vues 2E, réparti autour de l'axe optique PE
- PR: axe optique du dispositif de prise de vues 2R
- CR: champ optique du dispositif de prise de vues 2R, réparti autour de l'axe optique PR
- 1000: route à double sens de circulation, par exemple à deux voies qui sont dédiées une-à-une aux deux sens de circulation opposés
- 100E: véhicule circulant sur la route 1000 dans le sens d'un éloignement du cinémomètre
- 100R: véhicule circulant sur la route 1000 dans le sens d'un rapprochement vers le cinémomètre
- d: distance de rive, définie comme la distance d'installation, mesurée horizontalement, entre le centre de l'unité de contrôle routier, par exemple le centre de l'antenne d'émission-réception du cinémomètre, et la ligne de rive de la route sur un côté de laquelle l'unité de contrôle routier est installée

Dans la suite, les notations suivantes sont adoptées :
aE (resp. αR) angle de gisement, mesuré dans un plan horizontal entre l'axe radioélectrique P1 du cinémomètre 1 et l'orientation nominale pour l'axe optique PE (resp. PR) du dispositif de prise de vues 2E (resp. 2R)
βE (resp. βR) angle de site, mesuré dans un plan vertical entre l'axe radioélectrique P1 du cinémomètre 1 et l'orientation nominale pour l'axe optique PE (resp. PR) du dispositif de prise de vues 2E (resp. 2R)
MAGE (resp. MAGR) marge d'ajustement en gisement pour le dispositif de prise de vues 2E (resp. 2R), qui s'étend de part et d'autre de aE (resp. αR)
MASE (resp. MASR) marge d'ajustement en site pour le dispositif de prise de vues 2E (resp. 2R), qui s'étend de part et d'autre de βE (resp. βR)

Le dispositif de prise de vues 2E est dédié à la saisie d'au moins une image qui contient le véhicule 100E, ou une partie seulement de ce véhicule qui comprend sa plaque d'immatriculation arrière. Autrement dit, le dispositif de prise de vues 2E est dédié aux véhicules qui se déplacent sur la route 1000 dans le sens d'un éloignement par rapport au cinémomètre 1.

Indépendamment, le dispositif de prise de vues 2R est dédié à la saisie d'au moins une image qui contient le véhicule 100R, ou une partie seulement de ce véhicule qui comprend sa plaque d'immatriculation avant. Le dispositif de prise de vues 2R est ainsi dédié aux véhicules qui se déplacent sur la route 1000 dans le sens d'un rapprochement par rapport au cinémomètre 1.

De façon connue, les axes optiques PE et PR sont orientés angulairement de part et d'autre de l'axe radioélectrique P1, en projection dans un plan horizontal. De plus, l'axe optique PR forme avec la direction de la route 1000, un angle qui est plus grand que celui qui existe entre l'axe optique PE et la direction de la route 1000.

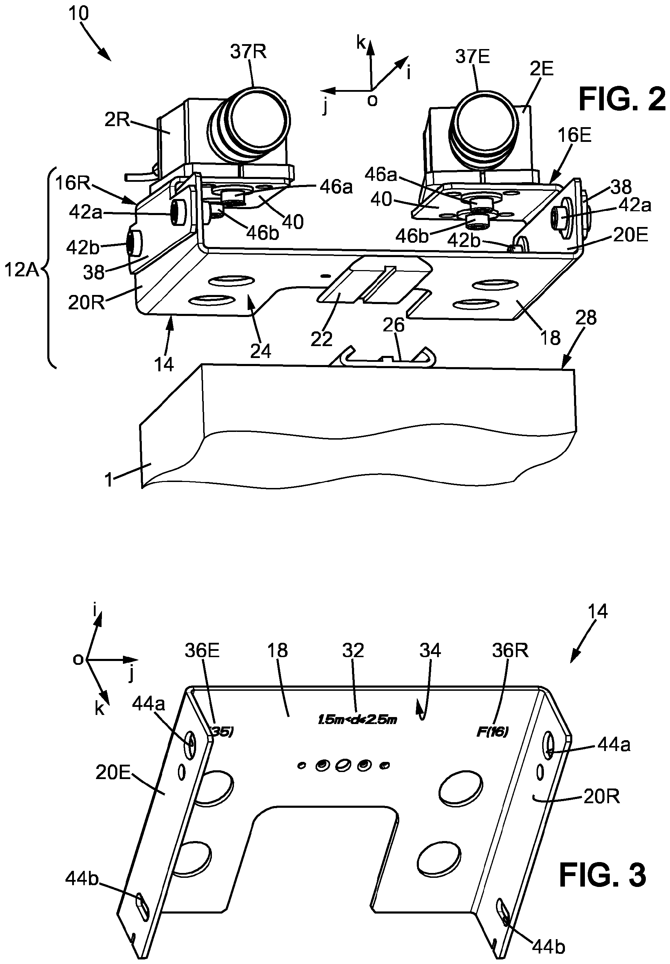

En référence à la figure 2, l'unité de contrôle routier 10 comprend le cinémomètre 1 et au moins un dispositif de prise de vues. Dans l'exemple considéré ici, elle comprend deux dispositifs de prise de vues qui sont référencés 2E et 2R.

Tous les angles cités dans la suite sont comptés de la façon suivante dans le dans le repère (O, i, j, k) qui est représenté sur les figures 2 à 8 : un angle de gisement dans le sens allant du vecteur j vers le vecteur i sera positif, et un angle de site dans le sens allant du vecteur k vers le vecteur i sera négatif.

L'unité de contrôle routier 10 comprend une platine 12A, qui est assemblée entre le cinémomètre 1 et les deux dispositifs de prise de vues 2E et 2R.

Dans le mode particulier de réalisation qui est décrit ici, la platine 12A comprend une pièce principale 14 et deux pièces secondaires 16E et 16R qui sont fixées chacune sur la pièce principale 14, une pièce secondaire étant prévue pour supporter chaque dispositif de prise de vues 2E, 2R séparément de l'autre.

Comme cela est visible sur la figure 3, la pièce principale 14 est réalisée d'un seul tenant et présente une section verticale en forme générale de U, comportant une âme horizontale 18 et deux ailes latérales et verticales 20E et 20R. Les qualificatifs «horizontal» et «vertical» font référence à l'orientation de la platine 12A qui est effective pendant un contrôle routier, au sein de l'unité 10 installée au bord de la route 1000.

L'unité de contrôle routier 10 comprend en outre un système d'assemblage pour fixer la platine 12A sur le cinémomètre 1. Dans l'exemple décrit ici, ce système d'assemblage comporte une glissière à queue d'aronde. Une telle glissière comprend un élément mâle 22 qui est fixé sur la face inférieure 24 de l'âme 18 de la pièce principale 14 (figure 2), et un élément femelle 26 qui est fixé sur la face supérieure 28 du cinémomètre 1. Les éléments mâle 22 et femelle 26 présentent des formes complémentaires qui sont adaptées pour coulisser l'une dans l'autre, pour permettre à un opérateur d'assembler rapidement la platine 12A sur le cinémomètre 1. Eventuellement, les éléments 22 et 26 peuvent être inversés entre la platine 12A et le cinémomètre 1. La platine 12A peut être bloquée en position de contrôle routier sur le cinémomètre 1 lorsque l'élément mâle 22 arrive en butée d'engagement complet dans l'élément femelle 26. Une telle liaison d'assemblage de la platine 12A avec le cinémomètre 1 permet un montage et un démontage rapides, et lorsque l'assemblage est terminé, l'orientation angulaire de la platine 12A par rapport à l'axe radioélectrique P1 du cinémomètre 1 est déterminée sans marge d'ajustement, avec justesse et fidélité. Evidemment, d'autres types de liaisons démontables peuvent être mis en œuvre alternativement, pour assembler la platine 12A et le cinémomètre 1 l'un avec l'autre tout en garantissant leur orientation relative. De telles liaisons alternatives peuvent utiliser des plots d'alignement, par exemple.

La platine 12A est dédiée à un intervalle prédéterminé de valeurs pour la distance de rive d. Dans le cas présent, elle est dédiée à l'intervalle de valeurs pour la distance de rive d, qui s'étend de 1,5 m jusqu'à 2,5 m. Cet intervalle identifié peut être inscrit sur la face supérieure 34 de l'âme 18 de la pièce principale 14 (voir référence 32 sur la figure 3). Alternativement, une référence à une notice d'utilisation de l'unité de contrôle routier 10 peut être inscrite sur la platine 12A, pour permettre à l'opérateur d'installation d'identifier l'intervalle de valeurs pour la distance de rive d, qui correspond à la platine.

La platine 12A peut comporter en outre, pour chaque dispositif de prise de vues 2E, 2R, une inscription d'une valeur de la longueur focale à adopter pour l'objectif 37E, 37R de ce dispositif de prise de vues. Pour la platine 12A des figures 3 à 8, la valeur qui est inscrite (voir référence 36E) pour la longueur focale de l'objectif 37E du dispositif de prise de vues 2E est 35 mm, et celle inscrite (voir référence 36R) pour l'objectif 37R du dispositif de prise de vues 2R, est 16 mm. Chaque valeur est avantageusement inscrite sur la face supérieure 34 de l'âme 18 de la pièce principale 14, du côté du dispositif de prise de vues correspondant. Ainsi, toutes les valeurs inscrites sont accessibles en permanence lors de l'installation de l'unité de contrôle routier 10 sur le bord de la route 1000, et peuvent être relues à volonté ultérieurement pour des vérifications.

La platine 12A fournit une double marge d'ajustement pour chaque dispositif de prise de vues de part et d'autre de l'orientation nominale : en site et en gisement.

La marge d'ajustement en site permet de compenser des variations possibles dans les largeurs des voies de circulation entre des routes différentes, l'existence éventuelle d'un dévers de la route 1000 et/ou un éventuel décalage en hauteur du sol à l'endroit de l'unité de contrôle routier 10 par rapport à la route 1000.

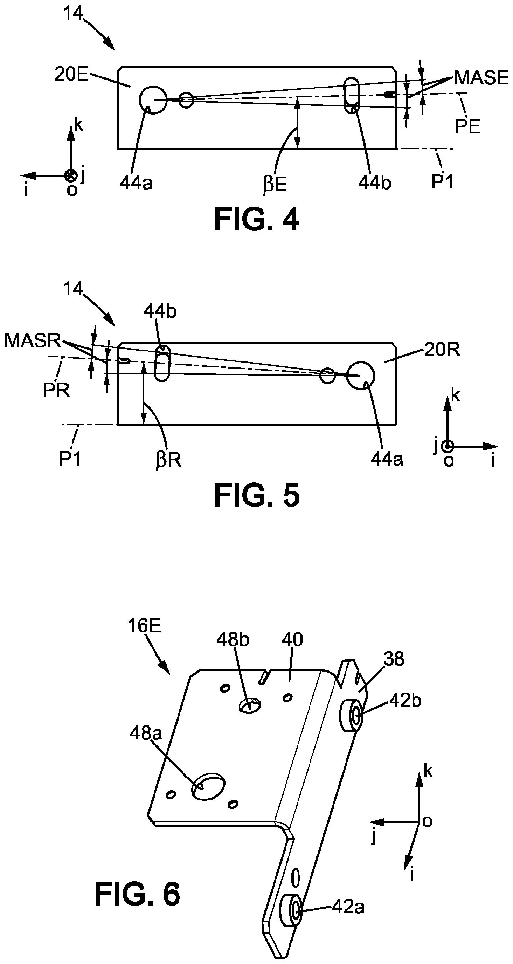

Comme illustré sur la figure 6, la pièce secondaire 16E de la platine 12A peut être réalisée d'un seul tenant et présenter une section verticale en forme générale de L retourné, ou en équerre. Elle comporte ainsi une branche verticale 38 et une branche horizontale 40. La branche 38 peut être fixée sur l'aile 20E de la pièce principale 14 à l'aide de deux ensembles vis/écrou 42a, 42b à travers des orifices 44a, 44b qui sont prévus en correspondance dans branche 38 et dans l'aile 20E (figures 2 et 4). Les orifices 44a dans la branche 38 et dans l'aile 20E, ainsi que l'orifice 44b dans la branche 38, peuvent présenter des sections circulaires, tandis que l'orifice 44b dans l'aile 20E peut présenter une forme oblongue. Ainsi, lorsque les ensembles vis/écrou 42a, 42b sont montés dans les orifices 44a, 44b correspondants, l'ensemble vis/écrou 42a forme un pivot à axe horizontal pour la pièce secondaire 16E. L'ensemble vis/écrou 42b peut se déplacer dans et le long de l'orifice oblong 44b, produisant ainsi la marge d'ajustement en site MASE. Cette marge MASE s'étend de part et d'autre de l'orientation nominale en site qui peut correspondre à la position de l'ensemble vis/écrou 42b au milieu de la longueur de l'orifice oblong 44b. Ainsi, l'orientation nominale en site du dispositif de prise de vues 2E est déterminée par la position du centre de l'orifice oblong 44b par rapport au centre de l'orifice circulaire 44a dans l'aile 20E, et la marge d'ajustement en site MASE est déterminée par la demi-longueur de l'orifice oblong 44b.

Les ensembles vis/écrou 42a, 42b forment aussi un système de verrouillage pour bloquer l'orientation angulaire en site du dispositif de prise de vues 2E. Ainsi, lorsque la platine 12A est assemblée au cinémomètre 1 et ce système de verrouillage est activé, c'est-à-dire lorsque les ensembles vis/écrou 42a, 42b sont serrés, l'axe optique PE du dispositif de prise de vues 2E est maintenu avec une orientation relative en site qui est constante par rapport à l'axe radioélectrique P1 du cinémomètre 1, jusqu'à un desserrage ultérieur des ensembles vis/écrou 42a, 42b.

Pour la platine 12A qui est décrite actuellement, l'orientation nominale en site de l'axe optique PE du dispositif de prise de vues 2E est inclinée par rapport à l'axe radioélectrique P1 du cinémomètre 1 d'un angle de site βE d'environ -1,3°, et la marge d'ajustement en site MASE qui est disponible de part et d'autre de cette orientation nominale est de 3°. Avec ces valeurs, la direction de l'axe optique PE peut varier en site entre -4,3° et +1,7° par rapport à l'axe radioélectrique P1.

La pièce secondaire 16R peut avoir une forme générale qui est symétrique de celle de la pièce secondaire 16E, par rapport à un plan vertical médian de la pièce principale 14. Pour la même platine 12A que celle décrite jusqu'à présent, l'orientation nominale en site de l'axe optique PR du dispositif de prise de vues 2R peut être inclinée par rapport à l'axe radioélectrique P1 du cinémomètre 1 d'un angle de site βR d'environ -3,6°, et l'amplitude de la marge d'ajustement en site MASR qui est disponible de part et d'autre de cette orientation nominale peut être encore de 3°. La figure 5 montre l'aile 20R de la pièce principale 14 qui détermine ces valeurs.

En référence aux figures 2 et 6, la branche 40 de la pièce secondaire 16E est fixée au dispositif de prise de vues 2E à l'aide de deux vis 46a, 46b qui traversent des orifices 48a, 48b prévus dans la branche 40, et qui pénètrent dans des filetages du dispositif de prise de vues 2E. L'orifice 48a peut présenter une section circulaire, tandis que l'orifice 48b peut présenter une forme oblongue. Ainsi, lorsque les vis 46a, 46b sont montées dans les orifices 48a, 48b et dans les filetages correspondants du dispositif de prise de vues 2E, la vis 46a forme un pivot à axe vertical alors que la vis 46b peut se déplacer dans et le long de l'orifice oblong 48b. Ainsi, l'orientation nominale en gisement du dispositif de prise de vues 2E est déterminée par la position du centre de l'orifice oblong 48b par rapport au centre de l'orifice circulaire 48a de la branche 40, et la marge d'ajustement en gisement MAGE est déterminée par la demi-longueur de l'orifice oblong 48b.

Les vis 46a, 46b forment simultanément un système de verrouillage qui est adapté pour bloquer l'orientation angulaire en gisement du dispositif de prise de vues 2E. Ainsi, lorsque la platine 12A est assemblée au cinémomètre 1 et ce système de verrouillage est activé, c'est-à-dire lorsque les vis 46a, 46b sont serrées, l'axe optique PE du dispositif de prise de vues 2E est maintenu avec une orientation relative en gisement qui est constante par rapport à l'axe radioélectrique P1 du cinémomètre 1.

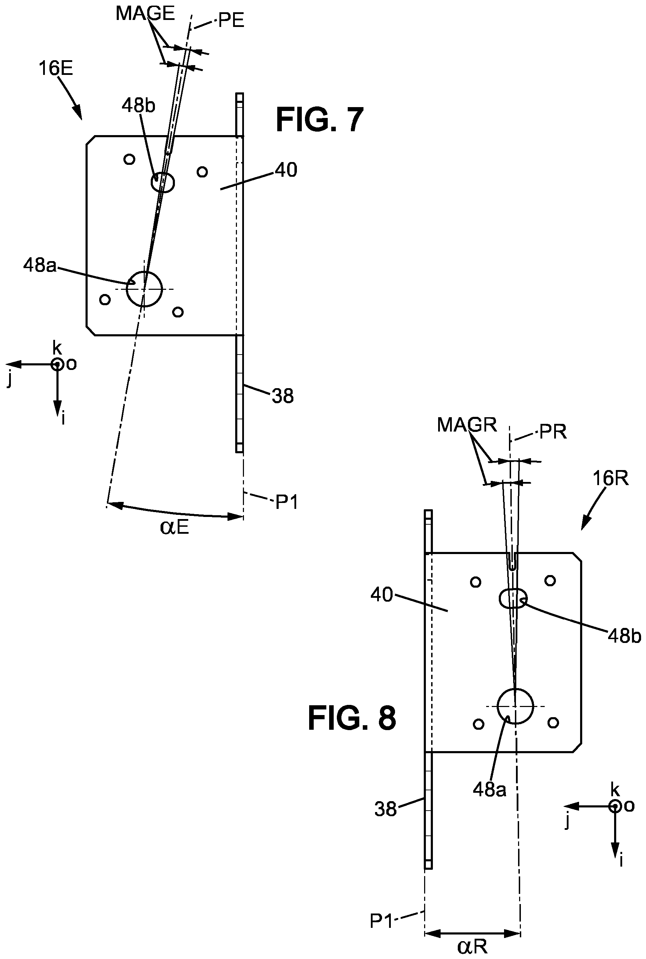

Dans l'exemple décrit ici et en référence à la figure 7, l'orientation nominale en gisement de l'axe optique PE du dispositif de prise de vues 2E est décalée par rapport à l'axe radiométrique P1 du cinémomètre 1 d'un angle de gisement αE d'environ -9,8°, et la marge d'ajustement en gisement MAGE est de 1° de part et d'autre de cette orientation nominale.

Un système similaire est prévu pour assembler le dispositif de prise de vues 2R sur la branche 40 de la pièce secondaire 16R. L'orientation nominale en gisement de l'axe optique PR du dispositif de prise de vues 2R est décalée d'un angle de gisement αR d'environ 1,2° par rapport à l'axe radiométrique P1 du cinémomètre 1, et la marge d'ajustement en gisement MAGR 2°de part et d'autre de cette orientation nominale. La figure 8 montre la branche 40 de la pièce secondaire 16R qui détermine ces valeurs.

Dans la réalisation de la platine 12A qui est illustrée par les figures 2 à 8, les orientations nominales en site et en gisement présentent une exactitude de ±1° par rapport à l'axe radioélectrique P1 du cinémomètre 1.

La marge d'ajustement en site MASE et/ou MASR peut être indépendante de la longueur focale de l'objectif 37E/37R du dispositif de prise de vues 2E/2R correspondant.

Indépendamment, la marge d'ajustement en gisement MAGE et/ou MAGR peut varier en fonction de la valeur de longueur focale qui est indiquée sur la platine pour chaque dispositif de prise de vues 2E/2R. Le tableau suivant est un exemple d'une telle dépendance de la marge d'ajustement en gisement MAGE/MAGR. Il indique aussi les valeurs du demi-angle d'ouverture du champ optique en gisement qui sont obtenues pour ces valeurs de focale avec les dispositifs de prise de vues utilisés :

| | | | | |
|---|---|---|---|---|
| Longueur focale (mm) | 16 | 25 | 35 | 50 |
| MAGE/MAGR (°) | 2 | 1,5 | 1 | 0,5 |
| Demi-angle en gisement (°) | 10,6 | 7 | 5 | 3,5 |

Comme précédemment, les valeurs qui sont indiquées dans ce tableau pour les marges MAGE et MAGR sont les amplitudes des ajustements angulaires qui sont disponibles de chaque côté de l'orientation nominale. Autrement dit, une valeur de 2° pour la marge en gisement MAGE signifie que l'axe optique PE peut être tourné manuellement de 2° vers la droite ou vers la gauche par rapport à la valeur de l'angle de gisement aE/aR qui correspond l'orientation nominale.

Dans la pratique, la distance de rive d qui correspond à l'installation de l'unité de contrôle routier 10 peut être imposée par des contraintes de terrain, telles que la présence d'une rambarde de sécurité ou d'un fossé sur le bord de la route 1000. Pour permettre d'utiliser l'unité de contrôle routier 10 dans de telles conditions d'installation variables, plusieurs platines sont disponibles selon l'invention, qui peuvent être substituées entre elles dans l'unité de contrôle routier 10. Chaque platine est dédiée à un intervalle de valeurs qui est différent des autres pour la distance de rive d et, pour cet intervalle de valeurs, assure une orientation adéquate de l'axe optique de chaque dispositif de prise de vues. Chaque platine peut donc être du type qui a été décrit ci-dessus, mais avec des valeurs pour tous les paramètres introduits, qui sont sélectionnées en fonction de l'intervalle pour la distance de rive d, auquel cette platine est dédiée. Le mode d'assemblage des platines avec le cinémomètre 1 par glissière en queue d'aronde permet de changer de platine rapidement, tout en assurant que la nouvelle platine qui est utilisée soit orientée d'emblée avec justesse et fidélité.

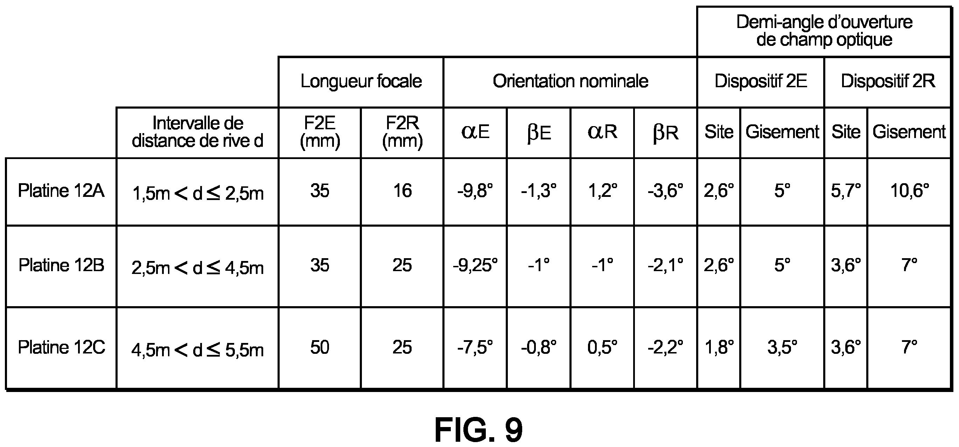

Par exemple, l'unité de contrôle routier 10 peut disposer d'un jeu de trois platines incluant la platine 12A qui a décrite précédemment, avec deux platines supplémentaires 12B, 12C. La platine 12A est dédiée à l'intervalle qui est compris entre 1,5 m et 2,5 m pour la distance de rive d, conformément à l'indication 32 (figure 3), la platine 12B peut être dédiée à l'intervalle compris entre 2,5 m et 4,5 m, et la platine 12C à l'intervalle compris entre 4,5 m et 5,5 m. Le tableau de la figure 9 fournit les valeurs numériques des paramètres de chaque platine. F2E est la valeur focale à utiliser pour l'objectif 37E du dispositif de prise de vues 2E, et F2R celle pour l'objectif 37R du dispositif de prise de vues 2R. Pour les dispositifs 2E et 2R utilisés, ces valeurs focales produisent les demi-angles d'ouverture des champs optiques, en site et en gisement, qui sont indiqués dans les quatre dernières colonnes du tableau.

Ainsi, les trois platines 12A, 12B, 12C constituent une segmentation des valeurs possibles pour la distance de rive d, pour déterminer l'orientation adéquate de chacun des dispositifs de prise de vues 2E, 2R. Elle fournit aussi la valeur à adopter pour la longueur focale de son objectif 37E/37R. Chaque platine assure ainsi qu'un des deux dispositifs de prise de vues 2E, 2R soit dédié à l'un des sens de circulation sur la route 1000. L'ensemble des valeurs du tableau 9 assure en outre qu'un véhicule qui circule sur la route 1000 soit saisi en image par l'un des deux dispositifs de prise de vues 2E, 2R, en fonction de son sens de circulation, dans des conditions qui sont satisfaisantes pour que le contrôle routier soit validé. En particulier, chaque image qui est saisie ne contient qu'un seul véhicule, et reproduit sa plaque d'immatriculation avant ou arrière avec de bonnes conditions de lisibilité, ainsi que des éléments du contexte d'environnement.

L'utilisation de l'unité de contrôle routier 10 comprend alors une première étape qui consiste à l'amener sur un côté de la route 1000, et à la disposer sur le sol de façon stable.

Dans une deuxième étape, l'opérateur d'installation mesure la valeur de la distance de rive d qui sépare l'unité de contrôle routier 10 de la ligne de rive de la route 1000, du même côté de la route 1000 que le lieu d'installation de l'unité de contrôle routier 10.

Dans une troisième étape, l'opérateur sélectionne une des platines 12A, 12B, 12C en fonction de la valeur qui a été mesurée à la deuxième étape, pour que cette valeur mesurée soit dans l'intervalle qui est inscrit pour la distance de rive d sur la platine sélectionnée. Dans l'exemple décrit ici, si la valeur mesurée pour la distance de rive d est comprise entre 1,5 m et 2,5 m, alors l'opérateur choisit la platine 12A. Si la valeur mesurée est comprise entre 2,5 m et 4,5 m, alors il choisit la platine 12B, et si la valeur mesurée est comprise entre 4,5 m et 5,5 m, il choisit la platine 12C.

L'opérateur assemble alors la platine sélectionnée sur le cinémomètre 1 lors d'une quatrième étape, en faisant coulisser l'élément mâle 22 dans l'élément femelle 26 jusqu'à arriver en butée.

Un ajustement manuel de l'orientation de chaque dispositif de prise de vues 2E, 2R à l'intérieur des marges d'ajustement en site MASE, MASR et en gisement MAGE, MAGR peut être effectué optionnellement. Un tel ajustement, qui peut être empirique, permet d'améliorer le centrage de chaque image saisie par rapport au véhicule contrôlé ou sa plaque d'immatriculation. Un tel centrage manuel des images permet de compenser des variations dans les largeurs des voies de circulation, un dévers éventuel de la route et un décalage en hauteur du sol à l'endroit de l'installation de l'unité de contrôle routier.

Lors d'une cinquième étape, l'opérateur serre ensuite les vis de la platine sélectionnée pour bloquer l'orientation en gisement et en site de chaque dispositif de prise de vues 2E, 2R.

Enfin, dans une sixième étape, l'opérateur choisit deux objectifs pour les dispositifs de prise de vues 2E, 2R, qui correspondent aux valeurs focales inscrites sur la platine sélectionnée. Il monte ensuite ces objectifs sur les dispositifs de prise de vues, par exemple en les vissant.

L'invention propose ainsi une méthode pour installer une unité de contrôle routier qui est exacte, fiable, simple et rapide. En effet, grâce aux platines qui prédéterminent les orientations nominales des dispositifs de prise de vues, et qui fournissent également les valeurs de longueur focale pour ces dispositifs, il suffit à l'opérateur de fixer la platine sur le cinémomètre et les dispositifs de prise de vues sur la platine. L'opérateur n'a donc plus de réglages importants à effectuer, mais seulement des ajustements en site et/ou en gisement qui sont limités, pour les dispositifs de prise de vues. La concordance entre le véhicule qui est contrôlé par le cinémomètre et celui qui figure sur l'image saisie par l'un des dispositifs de prise de vues, est ainsi assurée par conception de chaque platine, et non plus par un réglage complet qui est réalisé sur site par l'opérateur, et recommencé à chaque nouvelle installation.

L'invention peut être reproduite tout en modifiant certains aspects secondaires de celle-ci par rapport à la description détaillée qui a été fournie ci-dessus. Parmi de telles modifications possibles, les suivantes sont citées à titre d'exemples :
- le jeu de platines interchangeables peut comprendre un nombre différent de platines, par exemple deux, quatre, cinq platines, etc ;
- la segmentation des valeurs possibles pour la distance de rive dans le jeu de platines interchangeables, peut être différente de celle citée précédemment. Par exemple, un premier intervalle peut être compris entre 1 m et 2 m, un deuxième intervalle entre 2 m et 4 m, et un troisième intervalle entre 4 m et 5 m, etc ;
- l'unité de contrôle routier peut être conçue pour un seul dispositif de prise de vues, ou éventuellement plus de deux dispositifs de prise de vues ;
- les systèmes de réalisation des marges d'ajustement en gisement et/ou en site, peuvent être différents de ceux décrits. Par exemple, des systèmes d'ajustements angulaires à base de vis micrométriques peuvent être mis en œuvre ; et
- les objectifs des dispositifs de prise de vues qui ont été mentionnés sont chacun à longueur focale fixe. En variante, il est possible de prévoir un objectif à longueur focale variable pour chaque dispositif de prise de vues, qui est monté à demeure, et l'installation de l'unité de contrôle routier comprend alors un réglage de la longueur focale de chaque objectif à la valeur qui est inscrite sur la platine sélectionnée.

Enfin, dans tout ce qui a été décrit précédemment en référence au figures 2 à 8, chaque platine est telle que les axes optiques PE, PR se croisent en avant de la platine. Une telle configuration réduit le risque que les champs optiques CE et CR soient occultés en partie par des bords latéraux de la cabine 4. Possiblement, les dispositifs de prise de vues 2E et 2R dédiés aux deux sens de circulation peuvent être échangés entre les côtés gauche et droit des platines, de sorte que leurs axes optiques PE et PR ne se croisent pas, par exemple comme illustré sur la figure 1.

## Revendications

1. Unité de contrôle routier (10) comprenant un cinémomètre (1) et au moins un dispositif de prise de vues (2E, 2R),
et comprenant en outre une platine (12A) intermédiaire entre le cinémomètre et chaque dispositif de prise de vues,
la platine (12A) étant adaptée pour former une liaison d'assemblage démontable avec le cinémomètre (1), et pour, lorsque la platine est assemblée avec le cinémomètre, déterminer sans marge d'ajustement une orientation angulaire de la platine par rapport à un axe radioélectrique (P1) du cinémomètre,
la platine (12A) étant adaptée en outre pour supporter chaque dispositif de prise de vues (2E, 2R) avec une orientation angulaire dudit dispositif de prise de vues qui est contenue à l'intérieur d'au moins une marge d'ajustement s'étendant de part et d'autre d'une orientation nominale (aE, aR, βE, βR), la marge d'ajustement et l'orientation nominale étant déterminées par la platine (12A) pour chaque dispositif de prise de vues (2E, 2R),
et la platine (12A) comportant pour chaque dispositif de prise de vues (2E, 2R), un système de verrouillage adapté pour bloquer l'orientation angulaire dudit dispositif de prise de vues, de sorte que lorsque la platine est assemblée au cinémomètre et le système de verrouillage est activé, un axe optique (PE, PR) du dispositif de prise de vues est maintenu avec une orientation relative constante par rapport à l'axe radioélectrique (P1) du cinémomètre (1), l'unité de contrôle routier (10) étant adaptée pour que
l'orientation de chaque dispositif de prise de vues (2E, 2R) puisse être ajustée manuellement à l'intérieur de ladite au moins une marge d'ajustement correspondante telle que déterminée par la platine (12A),
**caractérisé en ce que** la platine (12A) est dédiée à un intervalle de valeurs pour une distance de rive (d) définie comme une distance d'installation, mesurée horizontalement, entre un centre de l'unité de contrôle routier et une ligne de rive d'une route (1000) sur un côté de laquelle l'unité de contrôle routier est destinée à être installée, et une indication (32) dudit intervalle de valeurs pour la distance de rive est inscrite sur la platine,
et **en ce que** l'unité de contrôle routier (10) comprend en outre au moins une platine supplémentaire (12B, 12C), toutes les platines (12A, 12B, 12C) étant interchangeables et adaptées pour être substituées les unes aux autres entre le cinémomètre (1) et chaque dispositif de prise de vues (2E, 2R), et les platines étant dédiées respectivement à des intervalles disjoints pour la valeur de distance de rive (d), une indication (32) de chaque intervalle de valeurs étant inscrite sur la platine correspondante.

2. Unité de contrôle routier (10) selon la revendication 1, pour laquelle ladite au moins une marge d'ajustement qui s'étend de part et d'autre de l'orientation nominale est une marge d'ajustement en gisement (MAGE, MAGR), ou une marge d'ajustement en site (MASE, MASR), ou à la fois une marge d'ajustement en gisement et une marge d'ajustement en site.

3. Unité de contrôle routier (10) selon la revendication 2, pour laquelle la marge d'ajustement en gisement (MAGE, MAGR) est inférieure à 5°, préférentiellement inférieure à 3°, et plus préférentiellement inférieure à 2°, de part et d'autre de l'orientation nominale.

4. Unité de contrôle routier (10) selon la revendication 3, pour laquelle la marge d'ajustement en gisement (MAGE, MAGR) est inférieure à 2°, 1,5°, 1° ou 0,5° de part et d'autre de l'orientation nominale, selon qu'une longueur focale (F2E, F2R) d'un objectif (37E, 37R) du dispositif de prise de vues (2E, 2R) correspondant est respectivement 16 mm, 25 mm, 35 mm ou 50 mm avec une valeur d'un demi-angle d'ouverture de champ optique en gisement qui est respectivement de 10,6°, 7°, 5° ou 3,5°.

5. Unité de contrôle routier (10) selon l'une quelconque des revendications précédentes, pour laquelle chaque platine (12A, 12B, 12C) comporte en outre, pour chaque dispositif de prise de vues (2E, 2R), une indication (36E, 36R) d'une valeur de longueur focale (F2E, F2R) pour un objectif (37E, 37R) dudit dispositif de prise de vues, à appliquer lorsque l'unité de contrôle routier est utilisée avec ladite platine.

6. Unité de contrôle routier (10) selon l'une quelconque des revendications précédentes, dans laquelle chaque platine (12A, 12B, 12C) est adaptée pour supporter deux dispositifs de prise de vues (2E, 2R), avec des orientations nominales (aE, aR, βE, βR) respectives qui sont différentes pour les deux dispositifs de prise de vues.

7. Unité de contrôle routier (10) selon les revendications 5 et 6, dans laquelle :
- l'intervalle pour la valeur de distance de rive (d), auquel est dédiée une première (12A) des platines, est compris entre 1,5 m et 2,5 m, et la valeur de longueur focale (F2E) indiquée pour un objectif (37E) d'un premier (2E) des deux dispositifs de prise de vues, est comprise entre 33 mm et 37 mm, et la valeur de longueur focale (F2R) indiquée pour un objectif (37R) de l'autre dispositif de prise de vues (2R), est comprise entre 14 mm et 18 mm ;
- l'intervalle pour la valeur de distance de rive, auquel est dédiée une deuxième (12B) des platines, est compris entre 2,5 m et 4,5 m, et la valeur de longueur focale indiquée pour l'objectif du premier dispositif de prise de vues, est comprise entre 33 mm et 37 mm, et la valeur de longueur focale indiquée pour l'objectif de l'autre dispositif de prise de vues, est comprise entre 23 mm et 27 mm ; et
- l'intervalle pour la valeur de distance de rive, auquel est dédiée une troisième (12C) des platines, est compris entre 4,5 m et 5,5 m, et la valeur de longueur focale indiquée pour l'objectif du premier dispositif de prise de vues, est comprise entre 48 mm et 52 mm, et la valeur de longueur focale indiquée pour l'objectif de l'autre dispositif de prise de vues, est comprise entre 23 mm et 27 mm.

8. Unité de contrôle routier (10) selon la revendication 7, dans laquelle pour l'un au moins des dispositifs de prise de vues (2E, 2R), la marge d'ajustement en gisement (MAGE, MAGR) relative audit dispositif de prise de vues varie en fonction de la valeur de longueur focale (F2E, F2R) indiquée sur au moins deux des platines (12A, 12B, 12C) pour ledit dispositif de prise de vues.

9. Jeu de plusieurs platines (12A, 12B, 12C) pour une unité de contrôle routier (10) comprenant un cinémomètre (1) et au moins un dispositif de prise de vues (2E, 2R), **caractérisé en ce que** les platines sont interchangeables et adaptées pour être substituées les unes aux autres entre le cinémomètre (1) et chaque dispositif de prise de vues (2E, 2R), et les platines sont dédiées respectivement à des intervalles disjoints de valeurs pour une distance de rive (d), définie comme une distance d'installation, mesurée horizontalement, entre un centre de l'unité de contrôle routier et une ligne de rive d'une route (1000) sur un côté de laquelle l'unité de contrôle routier est destinée à être installée, une indication (32) de chaque intervalle de valeurs étant inscrite sur la platine correspondante,
chaque platine (12A, 12B, 12C) étant adaptée pour former une liaison d'assemblage démontable avec le cinémomètre (1), et pour, lorsque ladite platine est assemblée avec le cinémomètre, déterminer sans marge d'ajustement une orientation angulaire de la platine par rapport à un axe radioélectrique (P1) du cinémomètre,
chaque platine (12A, 12B, 12C) étant adaptée en outre pour supporter chaque dispositif de prise de vues (2E, 2R) avec une orientation angulaire dudit dispositif de prise de vues qui est contenue à l'intérieur d'au moins une marge d'ajustement s'étendant de part et d'autre d'une orientation nominale (aE, aR, βE, βR), la marge d'ajustement et l'orientation nominale étant déterminées par ladite platine pour chaque dispositif de prise de vues (2E, 2R),
chaque platine étant adaptée pour que l'orientation de chaque dispositif de prise de vues (2E, 2R) puisse être ajustée manuellement à l'intérieur de l'au moins une marge d'ajustement correspondante telle que déterminée par la platine (12A),
et chaque platine (12A, 12B, 12C) comportant pour chaque dispositif de prise de vues (2E, 2R), un système de verrouillage adapté pour bloquer l'orientation angulaire dudit dispositif de prise de vues, de sorte que lorsque ladite platine est assemblée au cinémomètre et le système de verrouillage est activé, un axe optique (PE, PR) du dispositif de prise de vues est maintenu avec une orientation relative constante par rapport à l'axe radioélectrique (P1) du cinémomètre (1).

10. Procédé pour installer une unité de contrôle routier (10) sur un côté d'une route (1000), **caractérisé en ce qu'**il comprend les étapes suivantes :
/1/ fournir une unité de contrôle routier conforme à l'une quelconque des revendications 1 à 8, et comprenant un jeu de plusieurs platines (12A, 12B, 12C) conforme à la revendication 9 ;
/2/ mesurer une valeur pour la distance de rive (d) ;
/3/ sélectionner une des platines en fonction de la valeur mesurée à l'étape /2/, de sorte que ladite valeur mesurée soit comprise dans l'intervalle de valeurs pour la distance de rive dont l'indication (32) est inscrite sur la platine sélectionnée ;
/4/ assembler la platine sélectionnée à l'étape /3/ avec le cinémomètre (1) ; et
/5/ activer le système de verrouillage de la platine sélectionnée pour chaque dispositif de prise de vues (2E, 2R).

11. Procédé selon la revendication 10, comprenant en outre, entre les étapes /4/ et /5/, un ajustement manuel de l'orientation de chaque dispositif de prise de vues (2E, 2R) à l'intérieur de ladite au moins une marge d'ajustement (MASE, MASR, MAGE, MAGR) correspondante.

## Patentansprüche

1. Anlage zur Verkehrsüberwachung (10), aufweisend ein Radar-Geschwindigkeitsmessgerät (1) und mindestens eine Bildaufnahmevorrichtung (2E, 2R),
und ferner aufweisend eine Platte (12A) zwischen dem Radar-Geschwindigkeitsmessgerät und jeder Bildaufnahmevorrichtung,
wobei die Platte (12A) eingerichtet ist, eine lösbare Montageverbindung mit dem Radar-Geschwindigkeitsmessgerät (1) zu bilden, und um, wenn die Platte mit dem Radar-Geschwindigkeitsmessgerät montiert ist, eine Winkelausrichtung der Platte in Bezug auf die radioelektrische Achse (P1) des Radar-Geschwindigkeitsmessgeräts ohne Anpassungsspielraum zu bestimmen,
wobei die Platte (12A) ferner eingerichtet ist, jede Bildaufnahmevorrichtung (2E, 2R) mit einer Winkelausrichtung der Bildaufnahmevorrichtung zu lagern, die innerhalb von zumindest einem Anpassungsspielraum, der auf beiden Seiten einer Sollausrichtung (aE, aR, βE, βR) verläuft, durchgehend ist, wobei der Anpassungsspielraum und die Sollausrichtung für jede Bildaufnahmevorrichtung (2E, 2R) mittels der Platte (12A) bestimmt werden,
und wobei die Platte (12A) für jede Bildaufnahmevorrichtung (2E, 2R) ein Verriegelungssystem aufweist, das eingerichtet ist, die Winkelausrichtung der Bildaufnahmevorrichtung zu sperren, so dass wenn die Platte am Radar-Geschwindigkeitsmessgerät montiert ist und das Verriegelungssystem aktiviert wird, eine optische Achse (PE, PR) der Bildaufnahmevorrichtung in Bezug auf die radioelektrische Achse (P1) des Radar-Geschwindigkeitsmessgeräts (1) mit einer relativ konstanten Ausrichtung beibehalten wird,
wobei die Anlage zur Verkehrsüberwachung (10) derart eingerichtet ist, dass die Ausrichtung jeder Bildaufnahmevorrichtung (2E, 2R) manuell innerhalb des zumindest einen entsprechenden Anpassungsspielraums verstellt werden kann, wie er durch die Platte (12A) bestimmt wird,
**dadurch gekennzeichnet, dass** die Platte (12A) einem Werteintervall für einen Seitenabstand (d) zugeordnet ist, der als Installationsabstand definiert ist, horizontal gemessen zwischen einer Mitte der Anlage zur Verkehrsüberwachung und einer Seitenlinie (1000) auf einer Seite, auf der die Verkehrsüberwachungseinheit installiert werden soll, und eine Angabe (32) des Werteintervalls für den Seitenabstand auf die Platte eingeschrieben wird,
und dass die Verkehrsüberwachungseinheit (10) ferner zumindest eine zusätzliche Platte (12B, 12C) aufweist, wobei alle Platten (12A, 12B, 12C) austauschbar und eingerichtet sind, untereinander zwischen dem Radar-Geschwindigkeitsmessgerät (1) und jeder Aufnahmeeinheit (2E, 2R) ersetzt zu werden, und die Platten jeweils disjunkten Intervallen für den Seitenabstandswert (d) zugeordnet sind, wobei eine Angabe (32) für jedes Werteintervall auf die entsprechende Platte eingeschrieben ist.

2. Anlage zur Verkehrsüberwachung (10) nach Anspruch 1, bei der der zumindest eine Anpassungsspielraum, der auf beiden Seiten einer Sollausrichtung verläuft, ein Seitenpeilungsanpassungsspielraum (MAGE, MAGR) oder ein Leuchtweitenanpassungsspielraum (MASE, MASR) ist, oder sowohl ein Seitenpeilanpassungsspielraum als auch ein Leuchtweitenanpassungsspielraum ist.

3. Anlage zur Verkehrsüberwachung (10) nach Anspruch 2, bei der der Seitenpeilanpassungsspielraum (MAGE, MAGR) unter 5° liegt, bevorzugt unter 3° und ferner bevorzugt unter 2°, auf beiden Seiten der Sollausrichtung.

4. Anlage zur Verkehrsüberwachung (10) nach Anspruch 3, bei der mit einem Wert eines Öffnungshalbwinkels des optischen Felds der Seitenpeilung, der jeweils 10,6°, 7°, 5° oder 3,5° ist, der Seitenpeilanpassungsspielraum (MAGE, MAGR) auf beiden Seiten der Sollausrichtung, gemäß der eine Brennweite (F2E, F2R) eines Objektivs (37E, 37R) der entsprechenden Bildaufnahmevorrichtung (2E, 2R) jeweils 16 mm, 25 mm, 35 mm oder 50 mm ist, kleiner als 2°, 1,5°, 1° oder 0,5° ist.

5. Anlage zur Verkehrsüberwachung (10) nach einem der vorstehenden Ansprüche, bei der jede Platte (12A, 12B, 12C) ferner für jede Bildaufnahmevorrichtung (2E, 2R) eine Angabe (36E, 36R) eines Brennweitenwerts (F2E, F2R) für eine Linse (37E, 37R) der Bildaufnahmevorrichtung aufweist, der anzuwenden ist, wenn die Anlage zur Verkehrsüberwachung mit der Platte verwendet wird.

6. Anlage zur Verkehrsüberwachung (10) nach einem der vorstehenden Ansprüche, wobei jede Platte (12A, 12B, 12C) eingerichtet ist, zwei Bildaufnahmevorrichtungen (2E, 2R) mit den jeweiligen Sollausrichtungen (aE, aR, βE, βR), die für die zwei Bildaufnahmevorrichtungen unterschiedlich sind, zu lagern.

7. Anlage zur Verkehrsüberwachung (10) nach den Ansprüchen 5 und 6, wobei:
- das Intervall für den Seitenabstandswert (d), dem eine erste (12A) der Platten zugewiesen ist, zwischen 1,5 m und 2,5 m beträgt, und der Brennweitenwert (F2E), der für eine Linse (37E) einer ersten (2E) der zwei Bildaufnahmevorrichtungen angegeben wird, zwischen 33 mm und 37 mm beträgt, und der Wert der Brennweite (F2R), der für eine Linse (37R) der anderen Bildaufnahmevorrichtung (2R) angegeben wird, zwischen 14 mm und 18 mm beträgt;
- das Intervall für den Seitenabstandswert, dem eine zweite (12B) der Platten zugewiesen ist, zwischen 2,5 m und 4,5 m beträgt, und der Brennweitenwert, der für die Linse der ersten Bildaufnahmevorrichtung angegeben wird, zwischen 33 mm und 37 mm beträgt, und der Brennweitenwert, der für die Linse der anderen Bildaufnahmevorrichtung angegeben wird, zwischen 23 mm und 27 mm beträgt; und
- das Intervall für den Seitenabstandswert, dem eine dritte (12C) der Platten zugewiesen ist, zwischen 4,5 m und 5,5 m beträgt, und der Brennweitenwert, der für die Linse der ersten Bildaufnahmevorrichtung angegeben wird, zwischen 48 mm und 52 mm beträgt, und der Brennweitenwert, der für die Linse der anderen Bildaufnahmevorrichtung angegeben wird, zwischen 23 mm und 27 mm beträgt.

8. Anlage zur Verkehrsüberwachung (10) nach Anspruch 7, wobei für mindestens eine der Bildaufnahmevorrichtungen (2E, 2R) der Seitenpeilanpassungsspielraum (MAGE, MAGR) bezogen auf die Bildaufnahmevorrichtung abhängig von der Brennweite (F2E, F2R), die auf mindestens zwei der Platten (12A, 12B, 12C) für die Bildaufnahmevorrichtung angegeben ist, variiert.

9. Plattensatz (12A, 12B, 12C) für eine Anlage zur Verkehrsüberwachung (10), aufweisend ein Radar-Geschwindigkeitsmessgerät (1) und mindestens eine Bildaufnahmevorrichtung (2E, 2R), **dadurch gekennzeichnet, dass** die Platten austauschbar und eingerichtet sind, untereinander zwischen dem Radar-Geschwindigkeitsmessgerät (1) und jeder Bildaufnahmevorrichtung (2E, 2R) ersetzt zu werden, und die Platten jeweils disjunkten Werteintervallen für einen Seitenabstand (d) zugewiesen sind, der als Installationsabstand definiert ist, horizontal gemessen, zwischen einer Mitte der Anlage zur Verkehrsüberwachung und einer Seitenlinie (1000) auf einer Seite, auf der die Verkehrsüberwachungseinheit installiert werden soll, wobei eine Angabe (32) des Werteintervalls für den Seitenabstand auf die entsprechende Platte eingeschrieben wird,
wobei jede Platte (12A, 12B, 12C) eingerichtet ist, um eine lösbare Montageverbindung mit dem Radar-Geschwindigkeitsmessgerät (1) zu bilden, und um, wenn die Platte mit dem Radar-Geschwindigkeitsmessgerät montiert ist, eine Winkelausrichtung der Platte in Bezug auf eine radioelektrische Achse (P1) des Radar-Geschwindigkeitsmessgeräts ohne Anpassungsspielraum zu bestimmen, wobei jede Platte (12A, 12B, 12C) ferner eingerichtet ist, jede Bildaufnahmevorrichtung (2E, 2R) mit einer Winkelausrichtung der Bildaufnahmevorrichtung zu lagern, die innerhalb von zumindest einem Anpassungsspielraum, der auf beiden Seiten einer Sollausrichtung (aE, aR, βE, βR) verläuft, durchgehend ist, wobei der Anpassungsspielraum und die Sollausrichtung für jede Bildaufnahmevorrichtung (2E, 2R) mittels der Platte bestimmt werden, wobei jede Platte eingerichtet ist, damit die Ausrichtung jeder Bildaufnahmevorrichtung (2E, 2R) manuell innerhalb des zumindest einen entsprechenden Anpassungsspielraums, wie er durch die Platte (12A) bestimmt wird, verstellt werden kann,
und wobei jede Platte (12A, 12B, 12C) für jede Bildaufnahmevorrichtung (2E, 2R) ein Verriegelungssystem aufweist, das eingerichtet ist, die Winkelausrichtung der Bildaufnahmevorrichtung zu sperren, so dass, wenn die Platte am Radar-Geschwindigkeitsmessgerät montiert ist und das Verriegelungssystem aktiviert wird, eine optische Achse (PE, PR) der Bildaufnahmevorrichtung in Bezug auf die radioelektrische Achse (P1) des Radar-Geschwindigkeitsmessgeräts (1) mit einer relativ konstanten Ausrichtung beibehalten wird.

10. Verfahren zur Installation einer Anlage zur Verkehrsüberwachung (10) an einer Seite einer Straße (1000), **dadurch gekennzeichnet, dass** das Verfahren die folgenden Schritte umfasst:
/1/ Bereitstellung einer Anlage zur Verkehrsüberwachung nach einem der Ansprüche 1 bis 8, die einen Satz aus mehreren Platten (12A, 12B, 12C) nach Anspruch 9 aufweist;
/2/ Messung eines Werts für den Seitenabstand (d);
/3/ Auswählen einer der Platten abhängig von dem in Schritt /2/ gemessenen Wert, so dass der Messwert im Werteintervall für den Seitenabstand beinhaltet ist, dessen Angabe (32) auf die ausgewählte Platte geschrieben wird;
/4/ Montage der in Schritt /3/ ausgewählten Platte mit dem Radar-Geschwindigkeitsmessgerät (1); und
/5/ Aktivierung des Verriegelungssystems der ausgewählten Platte für jede Bildaufnahmevorrichtung (2E, 2R).

11. Verfahren nach Anspruch 10, ferner umfassend, zwischen den Schritten /4/ und /5/, eine manuelle Verstellung der Ausrichtung von jeder Bildaufnahmevorrichtung (2E, 2R), innerhalb des zumindest einen entsprechenden Anpassungsspielraums (MASE, MASR, MAGE, MAGR).

## Claims

1. A road control unit (10) comprising a speed detector (1) and at least one image capturing device (2E, 2R),
and further comprising an intermediate plate (12A) between the speed detector and each image capturing device,
the plate (12A) being adapted to form a removable connection assembly with the speed detector (1), and to determine without adjustment margin an angular orientation of the plate relative to a radio axis (P1) of the speed detector when the plate is assembled with the speed detector,
the plate (12A) being further adapted to support each image capturing device (2E, 2R) with an angular orientation of said image capturing device which is contained within at least one adjustment margin extending on either side of a nominal orientation (αE, αR, βE, βR), the adjustment margin and the nominal orientation being determined by the plate (12A) for each image capturing device (2E, 2R),
and the plate (12A) including for each image capturing device (2E, 2R), a locking system adapted to block the angular orientation of said image capturing device, such that when the plate is assembled to the speed detector and the locking system is activated, an optical axis (PE, PR) of the image capturing device is maintained with a constant relative orientation with respect to the radio axis (P1) of the speed detector (1),
the road control unit (10) being adapted so that the orientation of each image capturing device (2E, 2R) can be manually adjusted within said at least one corresponding adjustment margin as determined by the plate (12A),
**characterised in that** the plate (12A) is dedicated to an interval of values for an edge distance (d) defined as an installation distance, measured horizontally, between a centre of the road control unit and an edge line of a road (1000) on a side of which the road control unit is intended to be installed, and an indication (32) of said interval of values for the edge distance is registered on the plate,
and **in that** the road control unit (10) further comprises at least one additional plate (12B, 12C), all the plates (12A, 12B, 12C) being interchangeable and adapted to be substituted for each other between the speed detector (1) and each image capturing device (2E, 2R), and the plates being respectively dedicated to disjoint intervals for the edge distance value (d), an indication (32) of each interval of values being registered on the corresponding plate.

2. The road control unit (10) according to claim 1, for which said at least one adjustment margin which extends on either side of the nominal orientation is a directional adjustment margin (MAGE, MAGR), or an elevation adjustment margin (MASE, MASR), or both a directional adjustment margin and an elevation adjustment margin.

3. The road control unit (10) according to claim 2, for which the directional adjustment margin (MAGE, MAGR) is less than 5°, preferably less than 3°, and more preferably less than 2°, on either side of the nominal orientation.

4. The road control unit (10) according to claim 3, for which the directional adjustment margin (MAGE, MAGR) is less than 2°, 1.5°, 1° or 0.5° on either side of the nominal orientation, depending on whether a focal length (F2E, F2R) of a lens (37E, 37R) of the corresponding image capturing device (2E, 2R) is respectively 16 mm, 25 mm, 35 mm or 50 mm with a value of an opening half-angle of a directional optical field which is respectively 10.6°, 7°, 5° or 3.5°.

5. The road control unit (10) according to any one of the preceding claims, for which each plate (12A, 12B, 12C) further includes, for each image capturing device (2E, 2R), an indication (36E, 36R) of a focal length value (F2E, F2R) for a lens (37E, 37R) of said image capturing device, to be applied when the road control unit is used with said plate.

6. The road control unit (10) according to any one of the preceding claims, wherein each plate (12A, 12B, 12C) is adapted to support two image capturing devices (2E, 2R), with respective nominal orientations (αE, αR, βE, βR) which are different for the two image capturing devices.

7. The road control unit (10) according to claims 5 and 6, wherein:
- the interval for the edge distance value (d), to which a first one (12A) of the plates is dedicated, is comprised between 1.5 m and 2.5 m, and the focal length value (F2E) indicated for a lens (37E) of a first one (2E) of the two image capturing devices, is comprised between 33 mm and 37 mm, and the focal length value (F2R) indicated for a lens (37R) of the other image capturing device (2R), is comprised between 14 mm and 18 mm;
- the interval for the edge distance value, to which a second one (12B) of the plates is dedicated, is comprised between 2.5 m and 4.5 m, and the focal length value indicated for the lens of the first image capturing device, is comprised between 33 mm and 37 mm, and the focal length value indicated for the lens of the other image capturing device, is comprised between 23 mm and 27 mm; and
- the interval for the edge distance value, to which a third one (12C) of the plates is dedicated, is comprised between 4.5 m and 5.5 m, and the focal length value indicated for the lens of the first image capturing device is comprised between 48 mm and 52 mm, and the focal length value indicated for the lens of the other image capturing device, is comprised between 23 mm and 27 mm.

8. The road control unit (10) according to claim 7, wherein for at least one of the image capturing devices (2E, 2R), the directional adjustment margin (MAGE, MAGR) relating to said image capturing device varies according to the focal length value (F2E, F2R) indicated on at least two of the plates (12A, 12B, 12C) for said image capturing device.

9. A set of several plates (12A, 12B, 12C) for a road control unit (10) comprising a speed detector (1) and at least one image capturing device (2E, 2R), **characterised in that** the plates are interchangeable and adapted to be substituted for each other between the speed detector (1) and each image capturing device (2E, 2R), and the plates are respectively dedicated to disjoint intervals of values for an edge distance (d), defined as an installation distance, measured horizontally, between a centre of the road control unit and an edge line of a road (1000) on a side of which the road control unit is intended to be installed, an indication (32) of each interval of values being registered on the corresponding plate,
each plate (12A, 12B, 12C) being adapted to form a removable connection assembly with the speed detector (1), and to determine without adjustment margin an angular orientation of the plate relative to a radio axis (P1) of the speed detector, when said plate is assembled with the speed detector,
each plate (12A, 12B, 12C) being further adapted to support each image capturing device (2E, 2R) with an angular orientation of said image capturing device which is contained within at least one adjustment margin extending on either side of a nominal orientation (αE, αR, βE, βR), the adjustment margin and the nominal orientation being determined by said plate for each image capturing device (2E, 2R), each plate being adapted so that the orientation of each image capturing device (2E, 2R) can be manually adjusted within at least one corresponding adjustment margin as determined by the plate (12A),
and each plate (12A, 12B, 12C) including for each image capturing device (2E, 2R) a locking system adapted to block the angular orientation of said image capturing device, such that when said plate is assembled to the speed detector and the locking system is activated, an optical axis (PE, PR) of the image capturing device is maintained with a constant relative orientation with respect to the radio axis (P1) of the speed detector (1).

10. A method for installing a road control unit (10) on a side of a road (1000), **characterised in that** it comprises the following steps:
/1/ providing a road control unit in accordance with any one of claims 1 to 8, and comprising a set of several plates (12A, 12B, 12C) in accordance with claim 9;
/2/ measuring a value for the edge distance (d);
/3/ selecting one of the plates according to the value measured in step /2/, such that said measured value is comprised within the interval of values for the edge distance whose indication (32) is registered on the selected plate;
/4/ assembling the plate selected in step /3/ with the speed detector (1); and
/5/ activating the locking system of the selected plate for each image capturing device (2E, 2R).

11. The method according to claim 10, further comprising, between steps /4/ and /5/, a manual adjustment of the orientation of each image capturing device (2E, 2R) within said at least one corresponding adjustment margin (MASE, MASR, MAGE, MAGR).
